# EUROPEAN PATENT SPECIFICATION

(11) **EP 1 271 925 B1**
(45) Date of publication and mention of the grant of the patent: **21.07.2010**
(21) Application number: 02254388.8
(22) Date of filing: 24.06.2002
(51) Int. Cl.: H04N 1/409, H04N 1/401

(54) **Method for detecting an abnormal portion such as a black line in an image**
Verfahren zur Detektion eines abnormalen Teils wie einer schwarzen Linie in einem Bild
Méthode pour la détection d'une portion anormale comme une ligne noire dans une image

(30) Priority: 22.06.2001 JP 2001189805; 25.12.2001 JP 2001391386
(43) Date of publication of application: 02.01.2003
(73) Proprietor: Ricoh Company, Ltd., Tokyo 143-8555 (JP)
(72) Inventor: Ozaki, Tatsuya, Atsugi-shi, Kanagawa (JP)
(74) Representative: Leeming, John Gerard

(56) References cited:
- EP-A- 0 744 862
- EP-A- 1 085 746
- US-A- 6 034 794

## Description

The present invention generally relates to devices for reading a digital image, apparatuses for forming an image, communication devices, and methods for detecting an abnormal portion such as a black line in a digital image, and more particularly to the device for reading a digital image that optically scans the digital image in a main scanning direction and reads the digital image, an apparatus for forming an image in that a read digital image is formed, a communication device that sends or receives the read digital image, and the method for detecting an abnormal portion such as a black line in the digital image, while conveying each sheet of a document in a sub-scanning direction.

Conventionally, this kind of reader is known as follows.

As described in Japanese Laid-Open Patent Application No.6-303428, a conventional reading device reads a document, and determines and warns that a black line occurs when consecutive black pixels appear in the main scanning direction. As described in Japanese Laid-Open Patent Application No.2000-152008, another conventional reading device detects pixels forming a black line or a white line and warns, and adjusts by an image process so as to eliminate the black line or the white line. As described in Japanese Laid-Open Patent Application No. 2000-196814, still another conventional reading device shifts a reading position so as to avoid an abnormal image when detecting the abnormal image.

In any one of the conventional reading devices described above, it is possible to detect an abnormal image. However, any one of the convention reading devices does not determine the size or the type of the abnormal image. Accordingly, a cause of occurrences of the abnormal image such as the black line is not studied. As a result, there is a problem in that inadequate counterplans remain and the abnormal images still occur in current imaging products.

EP-A-0744862 discloses a method for correcting output signals of a plurality of photodetecting elements using a grey value histogram obtained by scanning a reference surface.

EP-A-1085746 discloses an image reading apparatus in which a white reference member is scanned before and after an original is scanned.

It is a general aim of the present invention to provide a device for reading a digital image, an apparatus for forming an image, a communication device, and a method for detecting an abnormal portion such as a black line in a digital image in which the above-mentioned problems are eliminated.

A more specific aim of the present invention is to provide a device for reading a digital image, an apparatus for forming an image, a communication device, and a method for detecting an abnormal portion such as a black line in a digital image, which can obtain statistics of size and type of abnormal images in a state of actually using in current imaging products so that the statistics can be utilized to compose an adequate counterplan.

The above aims of the present invention are achieved by a device for reading an image, an apparatus for forming an image, a communication device and a method for detecting an abnormal pixel as defined in the appended claims.

With embodiments of the invention, it is possible to know the true state of occurrence of abnormal pixels in current products.

Moreover, the device according to the present invention may include an image information printing part printing the image information, wherein the image information printing part prints out the statistical data.

Furthermore, the device according to the present invention may include an image information transmitting part transmitting the image information, wherein the image information transmitting part transmits the statistical data as facsimile data, for example.

With embodiments of the invention, it is possible to know whether a factor causing the abnormal pixels is a temporary dust or a blot other than a dust.

A communication device according to the present invention includes a device for reading the image according to the present invention. By this configuration, it is possible to remotely obtain information showing the true state of occurrence of abnormal pixels in current products.

In the following, exemplary embodiments of the present invention will be described with reference to the accompanying schematic drawings, in which:
Fig. 1 is a block diagram showing a reading device according to the first embodiment of the present invention;
Fig. 2 is a schematic diagram showing a configuration of a sheet feed reading device;
Fig. 3 is a graph showing a relationship between a waveform of a reference white board without deposits and a binary threshold;
FIG.4 is a graph showing a relationship between the waveform of a reference white board with deposits and the binary threshold;
FIG.5A and FIG.5B are flowcharts for explaining an operation of a reading device.
FIG.6 is a diagram showing statistical data of counters for black lines;
FIG.7A and FIG.7B are flowcharts for explaining an operation of a reading device according to a second embodiment of the present invention; and
FIG. 8 is a block diagram showing an image forming apparatus according to a third embodiment of the present invention.

In the following, embodiments of the present invention will be described with reference to the accompanying drawings.

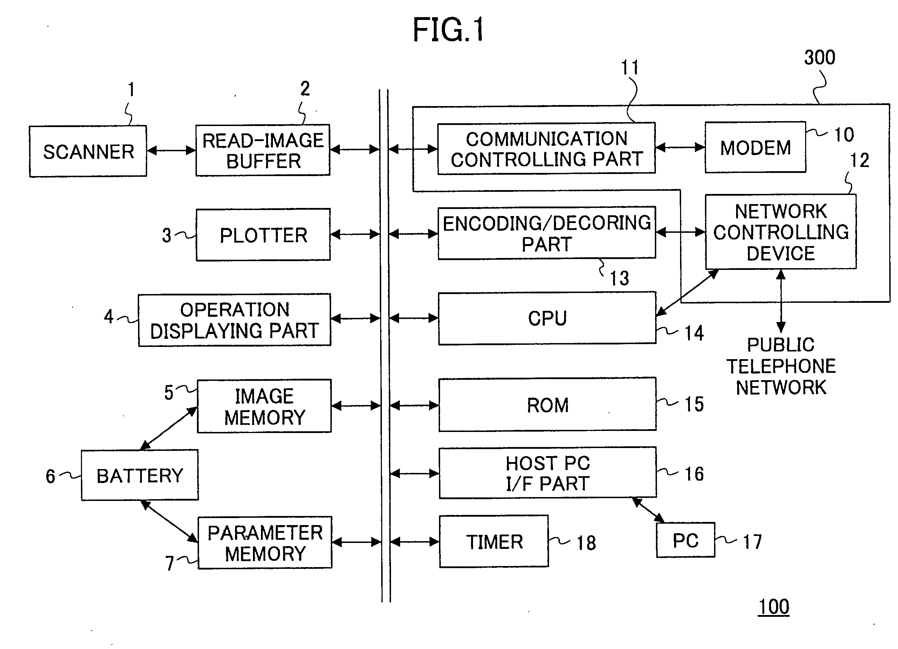

FIG. 1 is a block diagram showing a reading device according to a first embodiment of the present invention. As shown in FIG.1, a scanner 1 scans an image which is sent or copied, by a charge-coupled device (not shown) and an adhesion sensor (not shown) . In the scanner 1 as an abnormal pixel detecting part, a white board (not shown) (hereinafter, simply called "reference white board") as a reference used to conduct shading correction is arranged on a reading line and the abnormal pixel is detected by reading the reference white board.

A read-image buffer 2 includes a memory for storing a few lines through tens of lines or a few lines through hundreds of lines of image information read by the scanner 1 as a reading part, per line. The read-image buffer 2 reads out the image information per line from the read-image buffer 2 by each of a plurality of output methods, conducts a proper process, and transfers the image information to an output part (not shown in FIG.1). It should be noted that an abnormal pixel detecting method according to the first embodiment of the present invention can be realized by detecting a black pixel on the read-image buffer 2. A plotter 3 records the image information read by the scanner 1 and records and outputs various reports. An operation displaying part 4 includes a displaying part (not shown) including a liquid-crystal display, light emitting diodes, and a like, and an operating part (not shown) for operating an operation key. When an operator operates the displaying part and the operating part, the operation displaying part 4 displays the operational status of the reading device 100 while the operator conducts various operations with the reading device 100.

An image memory 5 stores the image information read by the scanner 1 or received via communication in a compression state. Since the image memory 5 is backed up a battery 6, the image information is not erased until the battery 6 is empty even if a power source of the reading device 100 is shut down. A dynamic RAM (Random Access Memory), which requires to periodically write information, is generally used as the image memory 5, and the information stored in the image memory 5 has not been erased for a few hours even if the power source of the reading device 100 is shut down. A parameter memory 7 stores parameters required for various controls and is backed up by the battery 6, so that the information stored in the parameter memory 7 is not erased even if the power source of the reading device 100 is shut down. A static RAM, which maintains information, is generally used as parameter memory 7 and the information maintained in the static RAM may be maintained for many years.

A modem 10 modulates and transmits the image information and signal that communicates in accordance with various steps, and is controlled by a communication controlling part 11. A network controlling device 12 conducts predetermined line control when a telephone line is connected and information is sent or received.

An encoding/decoding part 13 compresses image information to be sent in accordance with a known encoding method, and also reproduces an original image by decoding received image information. A CPU (Central Processing Unit) 14 is a microcomputer controlling the entire reading device 100. A ROM (Read Only Memory) 15 stores software for controlling the reading device 100. The CPU 14 controls the entire operation in accordance with instructions of a software program.

A host personal computer interface part (hereinafter simply called host PC I/F part) 16 exchanges command data and response data with a PC (Personal Computer) 17 and transmits the image information. In the first embodiment of the present invention, the host PC I/F part 16 is not specified for the reading device 100, but the host PC I/F part 16 can be realized by an I/F specification generally used. A timer 18 includes an integrated circuit capable of reading and writing the current time, and is used as a reference time for the reading device 100 according to the first embodiment of the present invention.

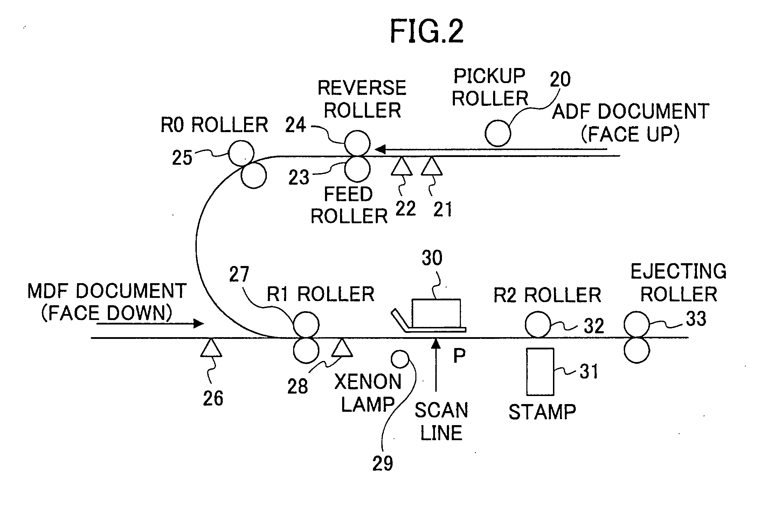

Next, the reading device 100 according to the first embodiment of the present invention will be described with reference to FIG.2. FIG.2 is a schematic diagram showing a configuration of a sheet feed reading device.

The sheet feed reading device includes a pickup roller 20 for picking up each sheet of a document that is stored in an Automatic Document Feeding device (hereinafter called "ADF") and is held face up, a sensor 21 for detecting a face-up side and a width (for example, a width of an A3 size or a B4 size) of the sheet fed from the pickup roller 20, a sensor 22 for detecting a front edge of the sheet, a feed roller 23 for conveying the sheet detected.by the sensors 21 and 22, a reverse roller 24, R0 rollers 25 for pushing the sheet conveyed from the feed roller 23 and the reverse roller 24, an MDF sensor 26 for detecting a face-down side of the sheet conveyed from the R0 rollers 25 and the width of the A3 size or the B4 size, R1 rollers 27 for decelerating after detecting the front edge of the sheet by the MDF sensor 26, a sensor 28 for detecting the front edge of the sheet conveyed from the R1 rollers 27, a xenon lamp 29 emitting light based on detecting a signal from the sensor 28, a scanner 30 for reading for one scan line (hereinafter called "read line" and shown by a position P in FIG.2), the sheet being illuminated by the xenon lamp 29, a stamp 31 for printing a stamp indicating "already read" on the sheet read by the scanner 30, a R2 roller 32 for conveying the sheet until the stamp 31, and ejecting rollers 33 for ejecting the sheet conveyed by the R2 roller 32. The feed roller 23 and the reverse roller 24 are a pair of an up roller and a down roller. Also, the R0 rollers 25, the R1 rollers 27, and the rollers 33 are each a pair of an up roller and a down roller.

In general, the reading device 100 conducts the shading correction using the reference white board before reading the image data. The reading device 100 records distortions of a light source and an optical system toward the main scanning direction per pixel, and reads by correcting per pixel so as to read a uniform density when reading by a binary process.

However, in a case in which there is dust or a blot on the optics when storing shading correction data, since the shading correction data include the abnormal pixel, the pixel is always processed as an abnormal pixel at a normal reading. As a result, a black line occurs. Especially, in a case of a sheet feed type of the reading device 100, ball pen ink not dried, correction fluid, or pencil writing on the sheet may blot a contact glass or the reference white board. In a case of copying, since a copy result is output, an abnormality can be detected. However, in a case of using a communication device such as a facsimile, since a sender cannot see how the sheet is read, the abnormality cannot be detected.

Accordingly, in the shading correction data, it is assumed that all pixels are flat data, and the binary process is conducted. In this case, since the shading correction is not conducted, a proper uniform concentration is not detected by the scanner 1. However, by bringing the binary threshold closer to the black side, the black pixel due to deposits of foreign matter can be detected by the scanner 1.

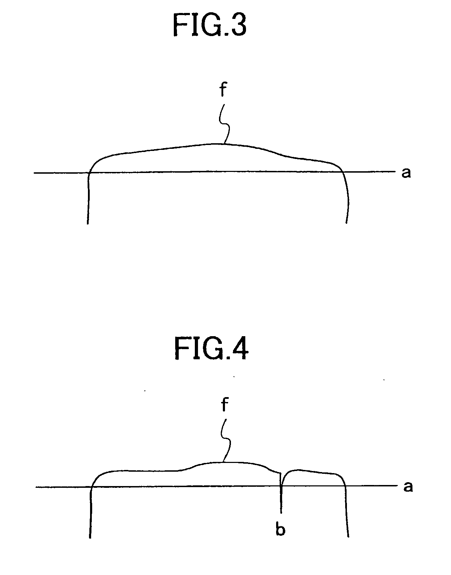

In a case in which the relationship between a waveform f of the reference white board without the deposits and the binary threshold is shown in a row image data without the shading correction as shown in FIG.3, the binary threshold is defined toward the black side more than the wave form f of the reference white board (shown by a solid line a in FIG.3). Consequently, the row image data can be read with all pixels as white data.

Moreover, in a case in which the relationship between the waveform f of the reference white board with the deposits and the binary threshold is shown in the row image data without the shading correction as shown in FIG.4, if there is an deposit b being at the black side more than the binary threshold a, since this deposit is located at lower level than the binary threshold a, a pixel after the binary process is defined as a black pixel. As a result, the pixel is determined to be an abnormal pixel.

As a matter of course, since each machine has a suitable value for the binary threshold, it is preferable to be able to easily change the suitable value for the binary threshold. For example, when the reading device 100 is shipped from a factory, the suitable value is defined per each machine.

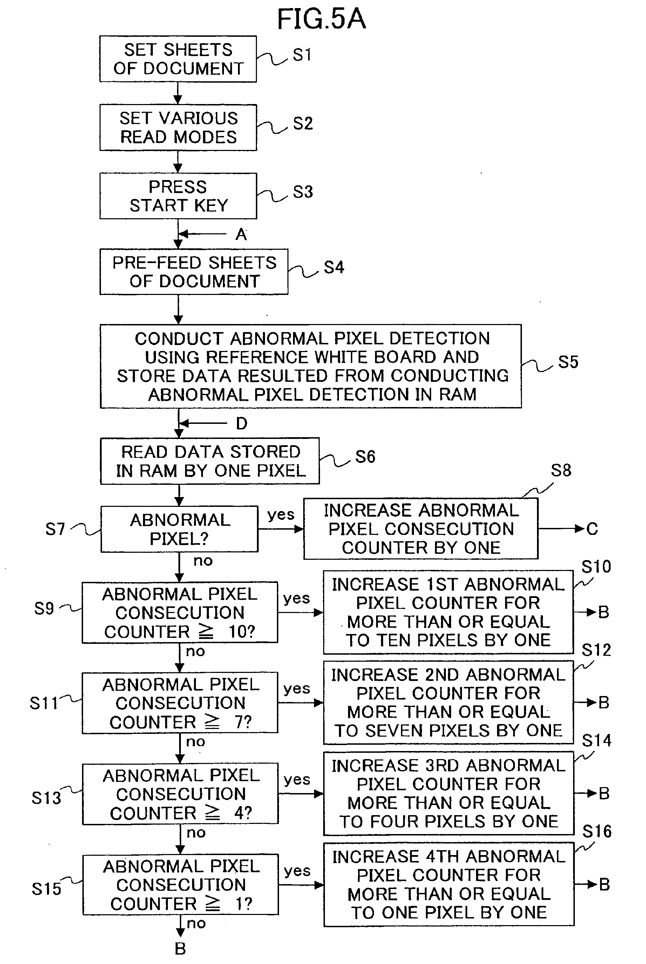

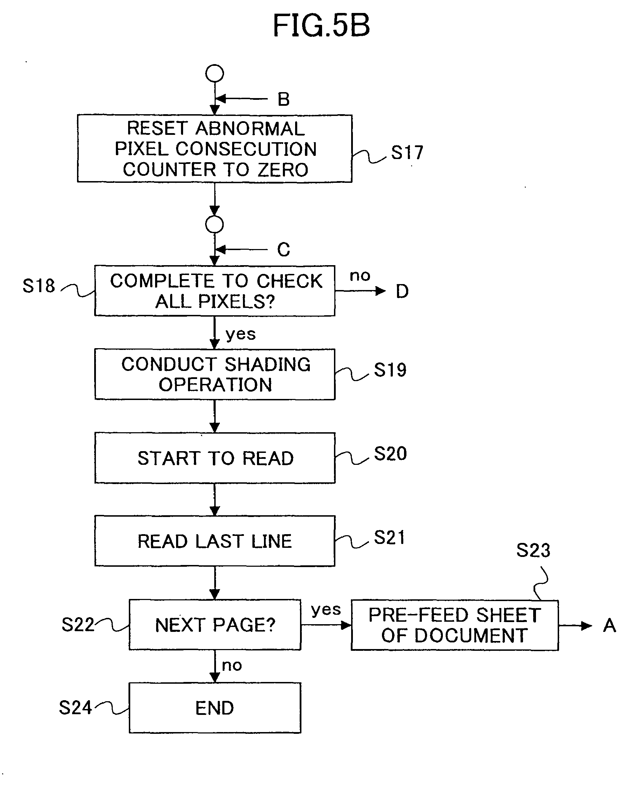

Next, an operation of the reading device 100 will be described with reference to FIG.5A and FIG. 5B. FIG. 5A and FIG.5B are flowcharts for explaining the operation of the reading device 100.

First, a user places sheets of a document (step S1). Next, the user sets various read modes (step S2) and then presses a start key (step S3). Then, the reading device 100 pre-feeds the sheets of the document (step S4). An operation for pre-feeding the sheets is a pre-feed mode in which the sheets of the document set in the document storage of the ADF are conveyed to a position in front of the read line. The operation for pre-feeding the sheets starts to convey the sheets of the document, successively conveys a predetermined number of sheets when the front edge of a first sheet arrives at the sensor 28, and then maintains the front edge of the sheet before the read line. The operation for pre-feeding the sheets in the ADF is conducted not only for the first sheet (first page) but also every sheet (page).

Next, the scanner 1 detects abnormal pixels. In practice, data read from the reference white board are stored in the SRAM by each pixel (step S5). For example, in a case of a sensor that can read at a line density of eight lines per one millimeter, eight bits are required per pixel. That is, in a case of an image processing system processing by 256 gradations, for a sheet of the A4 size (for example, 210 millimeter width), 1680 bytes (210 millimeter x 8 bits) are required.

Next, every one pixel is read from the SRAM storing data as a result of detecting the abnormal pixels (step S6) and it is determined whether or not there is an abnormal pixel in the data stored in the SRAM by individual pixel (step S7). The CPU 14 determines that the data from the SRAM are the abnormal pixel when gradation data are outside a predetermined range when reading the reference white board. For example, in a case of reading a regular reference white board, if the predetermined range is between 180 gradations and 230 gradations within the 256 gradations, the CPU 14 determines that the data outside the predetermined range are the abnormal pixel.

As described above, when the scanner 1 detects the abnormal pixel, an abnormal pixel counter for counting consecutive abnormal pixels increases by one (step S8). Then, after the step S8, step S18 in FIG. 5B is conducted as indicated by the letter C.

The operator can ascertain the number of consecutive abnormal pixels by a counter value of the abnormal pixel consecution counter when the scanner 1 detects a normal pixel. In this case, the counter value of the abnormal pixel consecution counter is stored per each number group of the abnormal pixels. In addition, the abnormal pixel counter is reset and the check for the abnormal pixels is started again.

Specifically, first, if there are no abnormal pixels, it is determined whether or not the counter value of the abnormal pixel consecution counter is more than or equal to ten (step S9). When the counter value is more than or equal to ten, a first abnormal pixel counter for more than or equal to ten pixels is incremented by one (step S10). Then, after the step S10, step S17 in FIG.5B is conducted as indicated by a letter B.

On the other hand, when the counter value is less than ten, it is determined whether or not the counter value of the abnormal pixel consecution counter is more than or equal to seven (step S11). When the counter value is more than or equal to seven, a second abnormal pixel counter for more than or equal to seven pixels and less than ten pixels is incremented by one (step S12). Then, after the step S12, the step S17 in FIG. 5B is conducted as indicated by the letter B.

On the other hand, when the counter value is less than seven, it is determined whether or not the counter value of the abnormal pixel consecution counter is more than or equal to four (step S13). When the counter value is more than or equal to four, a third abnormal counter for more than or equal to four pixels and less than seven pixels is incremented by one (step S14). Then, after the step S14, the step S17 in FIG.5B is conducted as indicated by the letter B.

On the other hand, when the counter value is less than four, it is determined whether or not the counter value of the abnormal pixel consecution counter is more than or equal to one (step S15). When the counter value is more than or equal to one, a fourth abnormal pixel counter for more than or equal to one pixel and less than four pixels is incremented by one (step S16). Then, after step S16, the step S17 in FIG.5B is conducted as indicated by the letter B.

On the other hand, when the counter value is less than one, the counter value of the abnormal pixel counter is reset to zero (step S17). After the step S17, it is determined whether or not all pixels are checked (step S18). When it is determined that all pixels are checked, the shading correction is conducted (step S19). On the other hand, when it is determined that all pixels are not checked, the step S6 is conducted as indicated by the letter D. Subsequently, the scanner 30 starts to read the read line (step S20). After reading the read line, the scanner 30 completes by reading a final read line (hereinafter called "final line reading") (step S21).

Subsequently, it is determined whether or not a next page exists after the first page (step S22). When it is determined that there is a next page, the sheets of the document are pre-fed and then the step S4 is conducted as indicated by a letter A (step S23). On the other hand, when it is determined that the next page does not exist, reading of the read lines is completed (step S24). As described above, it is possible to obtain statistical data for each number group of the abnormal pixels every time the operation for detecting the abnormal pixels is conducted.

As described above, since the statistical data for each number group of the abnormal pixels can be obtained in a practical usable state, it is possible to compose a proper counterplan for the abnormal pixels for each reading device 100. For example, the abnormal pixel counter for each number group of the abnormal pixels may be an abnormal pixel counter that is roughly classified into a group for one through three pixels, a group for four through six pixels, a group for seven through nine pixels, and a group for more than or equal to ten pixels. Alternatively, the abnormal pixel counter may be only one counter for counting the entire number of the abnormal pixels by individual pixel.

By storing the counter values in the SRAM that is not erased even if the power source of the reading device 100 is shut down, it is possible to resume counting the abnormal pixels after the power source of the reading device 100 is shut down and then is restored again, so that the statistical data can be continuously obtained.

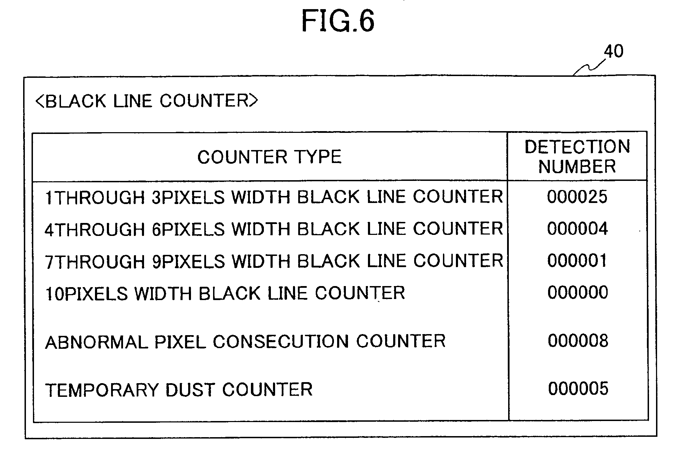

Next, the operation of the reading device 100 according to the first embodiment of the present invention will be described with reference to FIG.6.

As shown in FIG.6, in the statistical data for each number group of the abnormal pixels, statistical data 40 of a black line counter including items of "counter type" and "detection number" is printed and output. As described above, since the reading device 100 prints the statistical data 40 and outputs, it is possible to easily obtain current product information.

Moreover, for the reading device 100 according to the first embodiment of the present invention, for example, it is possible to send counter data for each number group of the abnormal pixels by facsimile by converting to an image data format. Since it is possible to obtain the statistical data 40 remotely, it is not necessary to go to a place where the reading device 100 is used. Therefore, user-friendliness can be improved.

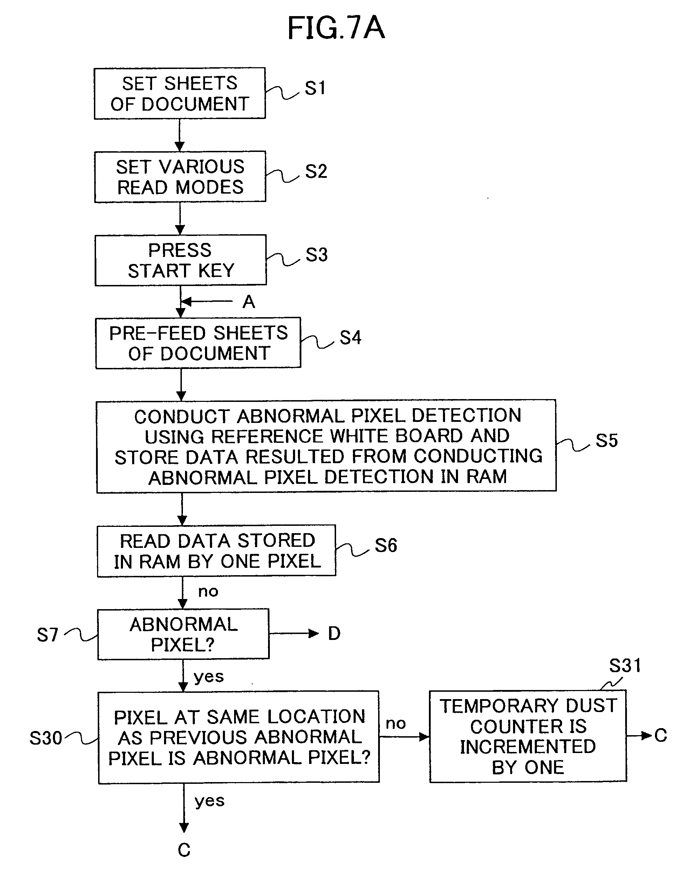

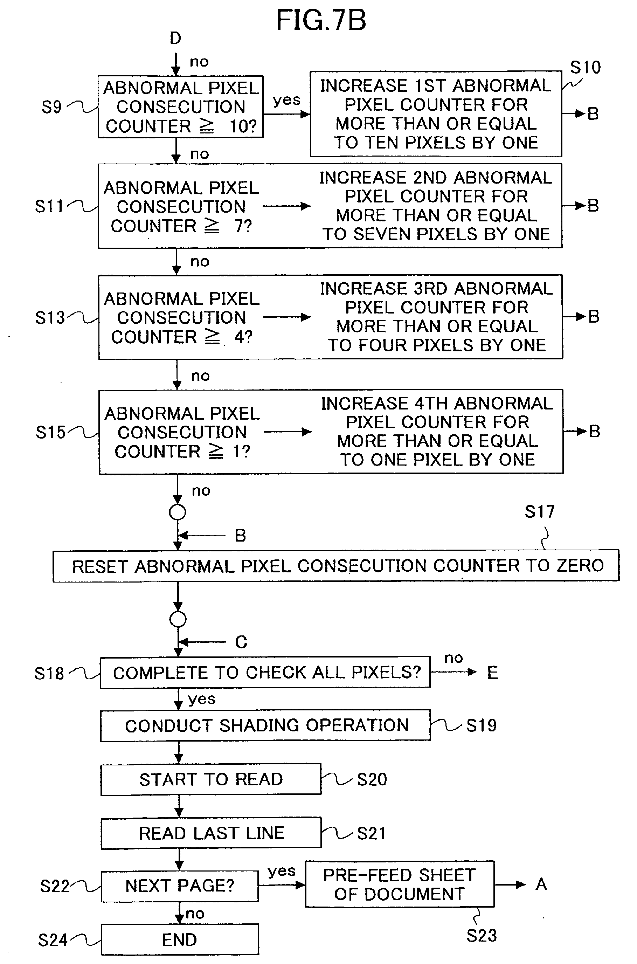

An operation of the reading device 100 according to a second embodiment of the present invention will be described with reference to FIG.7A and FIG.7B. FIG.7A and FIG.7B are flowcharts for explaining the operation of the reading device 100 according to the second embodiment of the present invention. In FIG. 7A and FIG.7B, explanations similar to those of the operation of the reading device 100 according to the first embodiment are omitted.

In the second embodiment, the method for detecting the abnormal pixels in the reading device 100 according to the first embodiment is used and a location of the abnormal pixel is stored in the SRAM. To store the location of the abnormal pixel in the SRAM, it is required to be the same size as that of data of the reference white board stored when the abnormal pixel is detected. Thus, pixel data are set as "Fifth" when the pixel is the abnormal pixel, and the pixel data are set as "00h" when the pixel is not the abnormal pixel.

In the first embodiment, it is checked by individual pixel whether or not there are abnormal pixels in the SRAM (step S7). In a case in which the regular reference white board is read, if the predetermined range is between 180 gradations and 230 gradations within the 256 gradations, the CPU 14 determines that the data outside the predetermined range are the abnormal pixel. On the other hand, when the abnormal pixel is detected, the abnormal pixel consecution counter is incremented by one (step S8).

However, in the second embodiment, if there are the abnormal pixels in step S7, similarly, the abnormal pixels are detected before the operation for reading the next page. When the abnormal pixel is detected, it is checked whether or not a detected location in the memory of the abnormal pixel of a previous page, or it is checked whether or not the pixel is the abnormal pixel at the same location as that of the abnormal pixel previously detected (step S30). When it is determined that there is no other abnormal pixel at the same location, the temporary dust counter is incremented by one (step S31). After the step S31, step S18 is conducted as indicated by the letter C. As described above, in the second embodiment, the statistics for the abnormal pixel caused by a temporary dust can be obtained. Therefore, it is possible to compose a proper counterplan for abnormal pixels in the reading device 100.

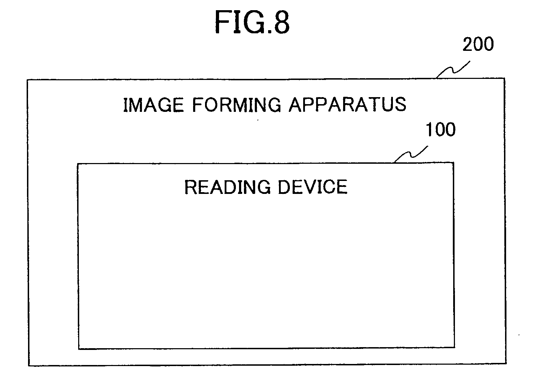

FIG.8 is a diagram showing an image forming apparatus according to a third embodiment of the present invention. In FIG. 8, an image forming apparatus 200 includes the reading device 100. In the image forming apparatus 200, it is possible to obtain practical data of the abnormal pixels occurring in current products.

Moreover, in the reading device 100 shown in FIG.1, the modem 10, the communication controlling part 11, and the network controlling device 12 can be configured as a communication device 300. In the communication device 300 where the reading device 100 according to the present invention is applied, it is possible to obtain practical data of the abnormal pixels occurring in current products.

The reference white board is provided on the read line in the scanner 1, and the scanner 1 includes an abnormal pixel detecting part for detecting the abnormal pixel read from the reference white board according to the present invention. The plotter 3 includes an image information printing part for printing the image information according to the present invention. The image memory 5 includes an image information storing part for storing the image information including the abnormal pixels according to the present invention. The modem 10 includes an image information transmitting part for transmitting the image information.

As described above, according to the present invention, it is possible to provide the reading device including the abnormal pixel detecting part for detecting the abnormal pixels read from the reference white board provided on the read line, and the image information storing part for storing image information including the abnormal pixels. The image information storing part stores data of the abnormal pixels obtained by the abnormal pixel detecting part for each number group of the abnormal pixels, as the statistical data. Accordingly, it is possible to obtain statistics of the amount and types of the abnormal pixels in a practical state in which the reading device is used in current products. Obtained statistics are useful to study causes of the abnormal pixels. Thus, a proper counterplan can be provided for the abnormal pixels. The reading device according to the present invention has outstanding effects as described above.

The present invention is not limited to the specifically disclosed embodiments, and variations and modifications may be made without departing from the scope of the present invention.

The present application is based on the Japanese priority applications No.2001-189805 filed on June 22, 2001 and No.2001-391386 filed on December 25, 2001.

## Claims

1. A device (100) for reading an image, comprising:
a reference white board for use as a reference on a read line before reading a document;
an abnormal pixel detecting part (14) for detecting abnormal pixels by reading said reference white board; and
an information storing part (14, 7) for storing information relating to the detected abnormal pixels,
**characterised in that** said information storing part (14,7) stores statistical data (40) representing the number of runs of consecutive abnormal pixels in each of a plurality of pixel number ranges.

2. A device according to claim 1, wherein:
said abnormal pixel detecting part (14) further detects whether each abnormal pixel is at the location of a previously detected abnormal pixel; and
said image information storing part (14, 7) stores results from detecting abnormal pixels not at the location of previously detected abnormal pixels as statistical data (40) of temporary deposits.

3. A device according to claim 1 or 2, further comprising an image information printing part for printing said image information, wherein said image information printing part prints out said statistical data (40).

4. A device according to either claim 1, 2 or 3, further comprising an image information transmitting part (10, 11) for transmitting said image information, wherein said image information transmitting part (10, 11) transmits said statistical data (40) as facsimile data.

5. An apparatus for forming an image, comprising a device for reading the image according to any one of the preceding claims.

6. A communication device, comprising a reading device for reading an image according to any one of claims 1 to 4.

7. A method for detecting abnormal pixels, comprising the steps of:
(a) detecting abnormal pixels by reading a reference white board for use as a reference on a read line before reading a document; and
(b) storing information relating to the detected abnormal pixels,
**characterised in that** said step (b) stores statistical data representing the number of runs of consecutive abnormal pixels in each of a plurality of pixel number ranges.

8. A method according to claim 7 wherein:
the step of detecting abnormal pixels further comprises detecting whether each abnormal pixel is at the location of a previously detected abnormal pixel; and
said step of storing information stores results from detecting abnormal pixels not at locations of previously detected abnormal pixels as statistical data (40) of temporary deposits.

## Patentansprüche

1. Vorrichtung (100) zum Lesen eines Bildes, die umfasst:
eine weiße Referenzplatte für die Verwendung als eine Referenz auf einer Lesezeile vor dem Lesen eines Dokuments;
einen Abschnitt (14) zum Detektieren anomaler Pixel, um durch Lesen der weißen Referenzplatte anomale Pixel zu detektieren; und
einen Informationsspeicherabschnitt (14, 7), um Informationen bezüglich der detektierten anomalen Pixel zu speichern,
**dadurch gekennzeichnet, dass** der Informationsspeicherabschnitt (14, 7) statistische Daten (40) speichert, die die Anzahl von Durchgängen durch aufeinander folgende anomale Pixel in jedem von mehreren Pixelanzahlbereichen repräsentieren.

2. Vorrichtung nach Anspruch 1, wobei:
der Abschnitt (14) zum Detektieren anomaler Pixel ferner detektiert, ob sich jedes anomale Pixel an dem Ort eines vorher detektierten anomalen Pixels befindet; und
der Bildinformations-Speicherabschnitt (14, 7) Ergebnisse aus der Detektion anomaler Pixel nicht an dem Ort von vorher detektierten anomalen Pixeln als statistische Daten (40) vorübergehender Ablagerungen speichert.

3. Vorrichtung nach Anspruch 1 oder 2, die ferner einen Bildinformations-Druckabschnitt umfasst, um die Bildinformationen zu drucken, wobei der Bildinformations-Druckabschnitt die statistischen Daten (40) ausdruckt.

4. Vorrichtung nach Anspruch 1, 2 oder 3,
die ferner einen Bildinformations-Übertragungsabschnitt (10, 11) umfasst, um die Bildinformationen zu übertragen, wobei der Bildinformations-Übertragungsabschnitt (10, 11) die statistischen Daten (40) als Telefaxdaten überträgt.

5. Vorrichtung zum Erzeugen eines Bildes, die eine Vorrichtung zum Lesen des Bildes nach einem der vorhergehenden Ansprüche enthält.

6. Kommunikationsvorrichtung, die eine Lesevorrichtung zum Lesen eines Bildes nach einem der Ansprüche 1 bis 4 enthält.

7. Verfahren zum Detektieren anomaler Pixel, das die folgenden Schritte umfasst:
(a) Detektieren anomaler Pixel durch Lesen einer weißen Referenzplatte für die Verwendung als eine Referenz auf einer Lesezeile, bevor das Dokument gelesen wird; und
(b) Speichern von Informationen bezüglich der detektierten anomalen Pixel, **dadurch gekennzeichnet, dass** der Schritt (b) statistische Daten speichert, die die Anzahl von Durchgängen durch aufeinander folgende anomale Pixel in jedem von mehreren Pixelanzahlbereichen repräsentieren.

8. Verfahren nach Anspruch 7, wobei:
der Schritt des Detektierens anomaler Pixel ferner das Detektieren, ob jedes anomale Pixel sich an dem Ort eines vorher detektierten anomalen Pixels befindet, umfasst; und
der Schritt des Speicherns von Informationen Ergebnisse aus der Detektion anomaler Pixel nicht an Orten von vorher detektierten anomalen Pixeln als statistische Daten (40) vorübergehender Ablagerungen speichert.

## Revendications

1. Dispositif (100) pour lire une image, comprenant :
un tableau blanc de référence destiné à être utilisé comme référence sur une ligne de lecture avant la lecture d'un document ;
une partie de détection de pixels anormaux (14) pour détecter des pixels anormaux en lisant ledit tableau blanc de référence ; et
une partie de stockage d'informations (14, 7) pour stocker des informations concernant les pixels anormaux détectés,
**caractérisé en ce que** ladite partie de stockage d'informations (14, 7) stocke des données statistiques (40) représentant le nombre de passages de pixels anormaux consécutifs dans chacune d'une pluralité de plages de nombre de pixels.

2. Dispositif selon la revendication 1, dans lequel :
ladite partie de détection de pixels anormaux (14) détecte en outre si chaque pixel anormal est à l'emplacement d'un pixel anormal détecté précédemment ; et
ladite partie de stockage d'informations (14, 7) stocke des résultats à partir de la détection de pixels anormaux qui ne sont pas à l'emplacement de pixels anormaux détectés précédemment comme des données statistiques (40) de dépôts temporaires.

3. Dispositif selon la revendication 1 ou 2, comprenant en outre une partie d'impression d'informations d'image pour imprimer lesdites informations d'image, dans lequel ladite partie d'impression d'informations d'image imprime lesdites données statistiques (40).

4. Dispositif selon la revendication 1, 2 ou 3, comprenant en outre une partie de transmission d'informations d'image (10, 11) pour transmettre lesdites informations d'image, dans lequel ladite partie de transmission d'informations d'image (10, 11) transmet lesdites données statistiques (40) comme des données de télécopie.

5. Appareil pour former une image, comprenant un dispositif pour lire l'image selon l'une quelconque des revendications précédentes.

6. Dispositif de communication, comprenant un dispositif de lecture pour lire une image selon l'une quelconque des revendications 1 à 4.

7. Procédé pour détecter des pixels anormaux, comprenant les étapes consistant à :
(a) détecter des pixels anormaux en lisant un tableau blanc de référence destiné à être utilisé comme référence sur une ligne de lecture avant la lecture d'un document ; et
(b) stocker des informations concernant les pixels anormaux détectés,
**caractérisé en ce que** ladite étape (b) stocke des données statistiques représentant le nombre de passages de pixels anormaux consécutifs dans chacune d'une pluralité de plages de nombre de pixels.

8. Procédé selon la revendication 7, dans lequel :
l'étape de détection de pixels anormaux comprend en outre la détection de si chaque pixel anormal est à l'emplacement d'un pixel anormal détecté précédemment ; et
ladite étape de stockage d'informations stocke des résultats à partir de la détection de pixels anormaux qui ne sont pas à des emplacements de pixels anormaux détectés précédemment comme des données statistiques (40) de dépôts temporaires.
